# EUROPÄISCHE PATENTSCHRIFT

(11) **EP 0 666 194 B1**
(45) Veröffentlichungstag und Bekanntmachung des Hinweises auf die Patenterteilung: **20.05.1998**
(21) Anmeldenummer: 94119780.8
(22) Anmeldetag: 14.12.1994
(51) Int. Cl.: B60N 2/30

(54) **Fahrzeugsitz, umwandelbar in einen Kindersitz**
Vehicle seat, convertible into a child seat
Siège de véhicule, transformable en siège d'enfant

(30) Priorität: 26.01.1994 DE 4402232
(43) Veröffentlichungstag der Anmeldung: 09.08.1995
(73) Patentinhaber: Bayerische Motoren Werke Aktiengesellschaft, 80788 München (DE)
(72) Erfinder: Lischo, Bernd, D-84405 Dorfen (DE); Steigerwald, Michael, D-85386 Eching (DE)

(56) Entgegenhaltungen:
- EP-A- 0 286 542
- EP-A- 0 518 726
- DE-A- 3 922 836
- FR-A- 2 692 209
- GB-A- 2 278 775

## Beschreibung

Die Erfindung betrifft einen Fahrzeugsitz, umwandelbar in einen Kindersitz, mit den im Oberbegriff des Patentanspruches 1 angegebenen Merkmalen.

Ein derartiger Fahrzeugsitz ist durch die DE-A-3 922 836 bekannt, bei dem an der Unterseite einer das Sitzpolster für Erwachsene tragenden Sitzschale eine gepolsterte Kindersitzplatte vorgesehen ist, die erst als Sitzgelegenheit für ein Kind nutzbar ist, wenn das Sitzpolster für erwachsene Personen nach vorne in eine aufrechte Lage geschwenkt ist. Die Kindersitzplatte ist über jeweils zwei seitliche Schwenkhebel abgestützt, wobei ein längsverstellbares Ende eines Schwenkhebels in ortsfesten Rastausnehmungen abzustützen ist. Die Verstellbewegungen der seitlichen Schwenkhebel sind nicht miteinander gekoppelt. Zur Lagefixierung der Kindersitzplatte sind für die Schwenkhebel Winkellagen gewählt, in denen durch die vertikale Sitzbelastung ein Schwenkhebel gegen die vordere Anschlagfläche der Sitzwanne belastet ist und in allen Kindersitzstellungen an dieser Anschlagfläche anliegt. Dieser Schwenkhebel kann somit nicht zur Höheneinstellung der Kindersitzplatte verschwenkt werden, die somit lediglich über den anderen Schwenkhebel in der Neigung verstellbar ist.

Die nicht vorveröffentlichte GB-A-2 278 775 weist an einem Sitzteil schwenkbar angelenkte Schwenkhebel auf, die jeweils am anderen Ende schwenkbar mit dem Sitzteilpolster verbunden sind. Zur Arretierung des Sitzteiles in einer eingestellten Höhenlage ist eine Diagonalstrebe verwendet, die an einem Ende schwenkbar an dem Sitzteil und an dem anderen Ende höhenverstellbar und in der eingestellten Höhenlage arretierbar an einem Schwenkhebel abgestützt ist. Bei einer anderen Ausführung kann das verstellbare Ende der Diagonalstrebe an dem Sitzteilpolster längsverstellbar und in einer Längslage, die einer gewünschten Höhenlage des Sitzteilpolsters entspricht, arretierbar sein. Bei geringen Sitzhöhen wirkt in der dann mit einem geringen Anstellwinkel angeordneten Diagonalstrebe eine erhebliche Zugkraft, die an dem verstellbaren Ende der Diagonalstrebe von einer stabil auszubildenden Arretiereinrichtung aufzunehmen ist.

Der Erfindung liegt die Aufgabe zugrunde, einen Fahrzeugsitz mit den Merkmalen im Oberbegriff des Patentanspruches 1 so weiterzubilden, daß das Sitzteilpolster einfacher höhenverstellbar ist, und eine mit geringem Aufwand zu fertigende Halteeinrichtung das Sitzteilpolster in der eingestellten Höhenlage festhält.

Diese Aufgabe ist durch die im Patentanspruch 1 angegebenen Merkmale gelöst. Durch die Anlenkung der Koppelstange einerseits an einem mittleren Bereich des vorderen Schwenkhebels und andererseits an einem über die Anlenkstelle des hinteren Schwenkhebels verlängerten Hebelarm dieses Schwenkhebels werden die beiden Schwenkhebel bei einer Höhenverstellung des Sitzteilpolsters in einfacher Weise entgegengesetzt verschwenkt und gleichzeitig das freie Ende des nicht an dem Sitzteil angelenkten Schwenkhebels in Längsrichtung verstellt. Die Längsverstellbewegung des freien Schwenkhebels steht im Verhältnis zur Sitzhöhenverstellung in einer solchen Größenordnung, daß das freie Schenkelende in hintereinander mit einer Längserstreckung ausgebildete Rastausnehmungen an dem Sitzteil eingreifen kann, die eine aufwendige Arretiereinrichtung zur Fixierung der Schwenkhebel ersetzen können.

Vorteilhafte Ausgestaltungen der Erfindung sind Gegenstand von Unteransprüchen.

Ein Ausführungsbeispiel der Erfindung wird anhand einer Zeichnung näher erläutert. Es zeigen
- Figur 1: den Fahrzeugsitz in seiner für einen Erwachsenen benutzbaren Normallage,
- Figur 2: den in einen Kindersitz umgewandelten Fahrzeugsitz und
- Figur 3: eine Figur 2 entsprechende Ansicht in maximaler Hochlage des Sitzteilpolsters.

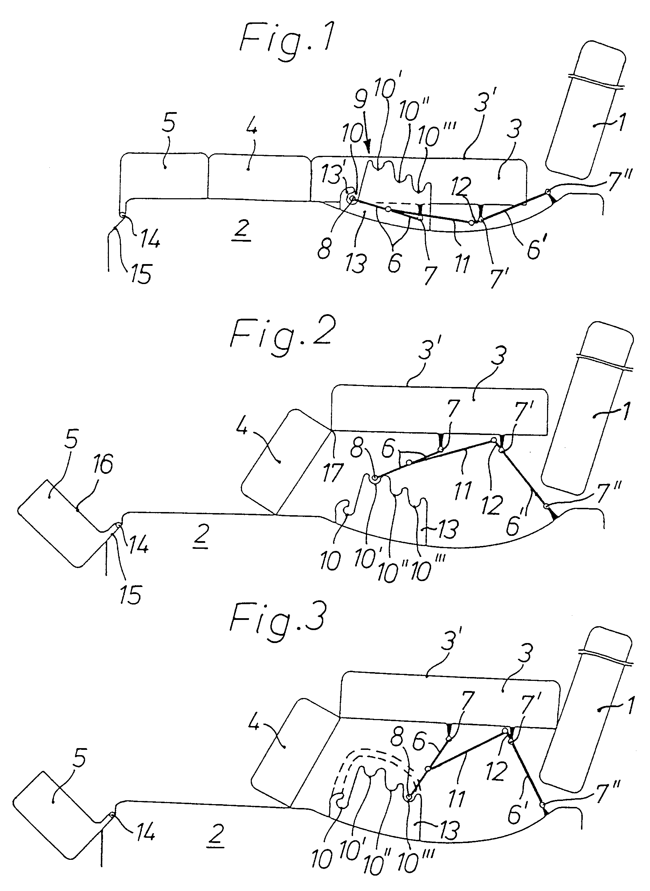

Der in Figur 1 in seiner Normallage dargestellte Fahrzeugsitz ist in einen Kindersitz umwandelbar. Er enthält bei dem Ausführungsbeispiel eine Rückenlehne 1, die in bekannter Weise neigungseinstellbar ist. Auf dem beispielsweise längsverstellbaren sowie höhen- und neigungseinstellbaren Sitzteil 2 sind bei dem Ausführungsbeispiel drei hintereinander angeordnete Polsterteile 3, 4, 5 abgestützt. Das hintere Polsterteil 3 bildet ein Sitzteilpolster 3', das jeweils in einem Sitzseitenbereich über zwei seitliche Schwenkhebel 6, 6' abgestützt ist, die eine Höheneinstellung des Sitzteilpolsters 3' ermöglichen. Die beiden seitlichen Schwenkhebel 6, 6' sind hierzu jeweils um eine Sitzquerachse 7, 7', 7'' schwenkbar etwa hintereinander an dem Sitzteilpolster 3' und der hintere Schwenkhebel 6' an seinem anderen Endbereich an dem Sitzteil 2 angelenkt. Das vordere untere Ende 8 des vorderen Schwenkhebels 6 ist zur Einstellung der Höhenlage des Sitzteilpolsters 3' etwa in Sitzlängsrichtung verstellbar und von einer Halteeinrichtung in den verschiedenen Längslagen an dem Sitzteil 2 arretierbar. Die Halteeinrichtung ist bei dem Ausführungsbeispiel durch eine an dem Sitzteil 2 abgestützte Rasteinrichtung 9 mit etwa in Sitzlängsrichtung hintereinander angeordneten Raststellen 10, 10', 10'', 10''' gebildet. Das vordere untere Ende 8 des vorderen Schwenkhebels 6 kann in jede der Raststellen 10, 10', 10'', 10''' eingreifen. Greift beispielsweise das vordere untere Ende 8 in die Raststelle 10' ein, so befindet sich das Sitzteilpolster 3' in einer ersten, zur Normallage erhöhten Kindersitzstellung. Greift dagegen das Ende 8 in die Raststelle 10'' oder 10''' ein, befindet sich das Sitzteilpolster 3' in einer weiter erhöhten Kindersitzstellung, wobei die höchste Kindersitzstellung erreicht ist, wenn das Ende 8 in die Raststelle 10''' eingreift. In der in Figur 1 dargestellten Normallage des Fahrzeugsitzes greift das vordere untere Ende 8 des vorderen Schwenkhebels 6 in die Raststelle 10 ein. Der hintere Schwenkhebel 6' weist einen über seine Anlenkstelle (Sitzquerachse 7') an dem Sitzteilpolster 3' vorstehenden Hebelarm 12 auf, an dem ein Ende einer Koppelstange 11 angelenkt ist, die an ihrem anderen Ende zwischen dem Sitzteilpolster 3' und dem Sitzteil 2 mit dem vorderen Schwenkhebel 6 gelenkig verbunden ist. Die Koppelstange 11 bildet einen Teil der Halteeinrichtung, die bei in eine Raststelle 10, 10', 10'', 10''' eingreifendem Ende 8 die Schwenkhebel 6, 6' und damit die Sitzteilpolsterung 3' ausreichend festhält. In der dargestellten Normallage bilden einerseits die Koppelstange 11 und der hintere Schwenkhebel 6' sowie andererseits die Koppelstange 11 und der vordere Schwenkhebel 6 jeweils ein Übertotpunktgelenk, die beispielsweise bei unfallbedingten Längskräften an dem Sitzteilpolster 3' dieses nach unten zu dem Sitzteil 2 belasten, wodurch das Sitzteilpolster 3' festgehalten bleibt. Um bei einer derartigen Belastung ein Herausverlagern des Endes 8 aus der Raststelle 10 zu verhindern, umgreift ein Wandabschnitt 13' der Raststelle 10 das Ende 8 entsprechend. Die bei dem Ausführungsbeispiel lediglich symbolisch und damit vereinfacht dargestellten Raststellen 10, 10', 10'', 10''' sind bei dem Ausführungsbeispiel durch Ausnehmungen in einer Rastkulisse 13 gebildet, die mit einer entsprechenden Gegenfläche an dem vorderen Schwenkhebel 6 zusammenwirken.

In Figur 2 greift das vordere untere Ende 8 des vorderen Schwenkhebels 6 in die Raststelle 10' ein, wodurch ein Kindersitz in einer ersten Höhenlage des Sitzteilpolsters 3' gebildet ist. Durch die nicht maßstabgerechte Darstellung befindet sich in dieser Kindersitzstellung der vordere Schwenkhebel 6 in einer ungünstigen Winkellage, die bei einer praktischen Ausführung möglicherweise nicht ausreichend ist, um eine Verlagerung der Sitzquerachse 7 nach unten in die Übertotpunktstellung zu verhindern. Bei einer praktischen Ausführung weist der vordere Schwenkhebel 6 in einer Figur 2 entsprechenden Stellung einen gegenüber der dargestellten Winkelstellung kleineren Winkel zur vertikalen Richtung auf. In der Figur ist erkennbar, daß das vordere Polsterteil 5 um eine vordere untere Querachse 14 aus der in Figur 1 dargestellten Normallage nach vorne in die in Figur 2 von einem Anschlag 15 an dem Sitzteil 2 begrenzte Winkellage schwenkbar ist. In dieser Winkellage bildet die in Normallage untere Seite 16 des vorderen Polsterteiles 5 eine Fußstütze und/oder eine Steighilfe für den Benutzer des Kindersitzes. Das mittlere Polsterteil 4 ist bei dem Ausführungsbeispiel lediglich lose auf das Sitzteil 2 aufgelegt und an seinem hinteren Randbereich etwa um eine Querachse 17 schwenkbar mit dem vorderen Rand des Sitzteilpolsters 3' verbunden. Bei dem Ausführungsbeispiel liegt in allen Höhenlagen des Sitzteilpolsters 3' der vordere untere Rand des mittleren Polsterteiles 4 auf dem Sitzteil 2 auf. Ebenso könnte an dem Polsterteil 4 oder 5 ein Anschlag vorgesehen sein, der zumindest in der maximalen Höhenlage des Sitzteilpolsters 3' die Winkellage des Polsterteiles 4 begrenzt.

Ist der aus einem Fahrzeugsitz gebildete Kindersitz in die Figur 3 entsprechende Lage verstellt, befindet sich das Sitzteilpolster 3' in seiner maximalen Höhenlage. In der Figur ist noch angedeutet, daß die bei dem Ausführungsbeispiel verwendete Rastkulisse 13 in einer etwa vertikalen Sitzlängsebene geschlossen ausgebildet sein kann, so daß sich in diesem Fall das Ende 8 des Schwenkhebels 6 nicht wesentlich von den Raststellen 10, 10', 10'', 10''' entfernen kann.

Die Erfindung ist auch in einer von dem Ausführungsbeispiel abweichende Weise realisierbar. Die Ausbildung der Schwenkhebel und der Koppelstange sowie die Anzahl der Raststellen und die Form der Rastkulisse sind nach konstruktiven und/oder stilistischen Gesichtspunkten vorzugeben. An dem Sitzteil können mehr oder weniger als drei Polsterteile abgestützt sein. Es ist auch nicht erforderlich, daß das Sitzteilpolster das hinterste Polsterteil bildet. Die beiden Schwenkhebel können auch etwa parallel angeordnet sein und die Halteeinrichtung eine lösbare Verriegelungseinrichtung aufweisen, die in verschiedenen Winkelstellungen der Schwenkhebel einen zugeordneten vorderen oder hinteren Schwenkhebel in den verschiedenen Winkelstellungen arretiert. Die Verriegelungseinrichtung kann auch durch Selbsthemmung eines motorischen Antriebs gebildet sein, der ein Verschwenken des zugeordneten Schwenkhebels in die gewünschte Winkelstellung bewirkt. Um das Anheben des Sitzteilpolsters zu erleichtern bzw. das Absenken zu dämpfen, kann ein Feder- bzw. Dämpfungselement vorgesehen sein, das an dem Sitzteilelement, an einem Schwenkhebel oder an der Koppelstange angreift. Die Polsterteile können beispielsweise mit einer zugeordneten Sitzschale verbunden sein. Die jeweils seitlich gegenüberliegenden Schwenkhebel können zu einem gemeinsamen Schwenkhebel verbunden sein, der unter dem Sitzteilpolster beispielsweise in Seitenmitte des Fahrzeugsitzes angeordnet ist.

## Patentansprüche

1. Fahrzeugsitz, umwandelbar in einen Kindersitz, mit einer Rückenlehne (1) und einem Sitzteil (2) mit einem Sitzteilpolster (3'), das über jeweils zwei seitliche Schwenkhebel (6, 6') aus einer Normallage in eine erhöhte Stellung verstellbar ist, wobei die Schwenkhebel (6, 6') hintereinander angeordnet und jeweils um eine Sitzquerachse (7, 7') schwenkbar an dem Sitzteilpolster (3') angelenkt sind und ein Schwenkhebel (6') an seinem anderen Endbereich an dem Sitzteil (2) angelenkt ist, wobei das von dem Sitzteilpolster (3') abgewandte Ende (8) des nicht an dem Sitzteil (2) angelenkten Schwenkhebels (6) zur Einstellung der Höhenlage des Sitzteilpolsters (3') etwa längsverstellbar und in verschiedenen Längslagen von einer Halteeinrichtung (13) an dem Sitzteil (2) festzuhalten ist, dadurch gekennzeichnet, daß der hintere Schwenkhebel (6') der an dem Sitzteil (2) angelenkte Schwenkhebel ist und einen über seine Anlenkstelle (7') an dem Sitzteilpolster (3') vorstehenden Hebelharm (12) aufweist, an dem eine Koppelstange (11) angelenkt ist, die andererseits mit einem mittleren Bereich des vorderen Schwenkhebels (6) gelenkig verbunden ist.

2. Fahrzeugsitz nach Anspruch 1, dadurch gekennzeichnet, daß die Halteeinrichtung an dem Sitzteil (2) eine Rasteinrichtung (13) mit etwa in Sitzlängsrichtung hintereinander angeordneten Raststellen (10, 10', 10'', 10''') aufweist, in die das von dem Sitzteilpolster (3') abgewandte Ende (8) des vorderen Schwenkhebels (6) einrasten kann.

3. Fahrzeugsitz nach Anspruch 2, dadurch gekennzeichnet, daß die Raststellen (10, 10', 10'', 10''') durch Ausnehmungen beispielsweise in der als Rastkulisse gebildeten Rasteinrichtung (13) oder durch Außenflächen beispielsweise an Zapfen oder dergleichen gebildet sind, die mit einer entsprechenden Gegenfläche an dem vorderen Schwenkhebel (6) zusammenwirken.

4. Fahrzeugsitz nach einem der Ansprüche 1 bis 3, dadurch gekennzeichnet, daß die Halteeinrichtung eine lösbare Verriegelungseinrichtung aufweist, die in den verschiedenen Längslagen bzw. in den Raststellen den vorderen Schwenkhebel oder in den verschiedenen Winkelstellungen den betreffenden vorderen oder hinteren Schwenkhebel (6) arretiert.

5. Fahrzeugsitz nach Anspruch 3 oder 4, dadurch gekennzeichnet, daß die Rastkulisse (13) in einer etwa vertikalen Sitzlängsebene geschlossen ausgebildet ist.

6. Fahrzeugsitz nach einem der Ansprüche 1 bis 5, dadurch gekennzeichnet, daß das Sitzteil (2) mehrere hintereinander angeordnete Polsterteile (3, 4, 5) aufweist, von denen ein hinteres Polsterteil (3) das Sitzteilpolster (3') bildet.

7. Fahrzeugsitz nach Anspruch 6, dadurch gekennzeichnet, daß das vordere Polsterteil (5) um eine vordere untere Querachse (14) aus der Normallage nach vorne in eine begrenzte Winkellage schwenkbar ist, in der die in Normallage untere Seite (16) des vorderen Polsterteiles (5) eine Fußstütze und/oder eine Steighilfe für den Benutzer des Kindersitzes bildet.

8. Fahrzeugsitz nach Anspruch 6 oder 7, dadurch gekennzeichnet, daß ein mittleres Polsterteil (4) lose auf das Sitzteil (2) aufgelegt und an seinem hinteren Randbereich etwa um eine Querachse (17) schwenkbar mit dem vorderen Rand des Sitzteilpolsters (3') verbunden ist.

9. Fahrzeugsitz nach Anspruch 8, dadurch gekennzeichnet, daß in einigen oder in allen Höhenlagen des Sitzteilpolsters (3') der vordere Rand des mittleren Polsterteiles (4) auf dem Sitzteil (2) aufliegt und/oder zumindest in der höchsten Stellung des Sitzteilpolsters das mittlere Polsterteil an einem Anschlag des Sitzteilpolsters anliegt.

## Claims

1. A vehicle seat, convertible into a child seat, with a back rest (1) and a seat section (2) with a seat section cushion (3') which can be moved from a normal position to an elevated position via two laterally-arranged swivel levers (6, 6'), which swivel levers (6, 6') are arranged one behind the other and are articulated to the seat section cushion (3') about a seat transverse axis (7, 7') and a swivel lever (6') is articulated to the seat section (2) at its other end region, wherein that end (8) of the swivel lever (6) not articulated on the seat section (2) facing away from the seat section cushion (3') for adjustment of the height position of the seat section cushion (3') is to be held in an approximately longitudinal-adjustable manner and in different longitudinal positions by a holding device (13) on the seat section (2), characterised in that the posterior swivel lever (6') is the swivel lever articulated on the seat section (2) and has a lever arm (12) projecting beyond its articulation point (7') on the seat section cushion (3') and to which a coupling rod (11) is articulated, which on the other hand is connected in an articulated manner to a central region of the anterior swivel lever (6).

2. A vehicle seat according to claim 1, characterised in that the holding device on the seat section (2) has a detent device (13) with snap-in positions (10, 10', 10'', 10''') approximately arranged one behind the other in the seat longitudinal direction in which the end (8) of the anterior swivel lever (6) facing away from the seat section cushion (3') can engage.

3. A vehicle seat according to claim 2, characterised in that the snap-in positions (10, 10', 10'', 10''') are formed through recesses, for instance in the detent device (13) arranged as a detent link or through exterior surfaces for example on pins or the like which act in conjunction with a corresponding counter-surface on the anterior swivel lever (6).

4. A vehicle seat according to one of claims 1 to 3, characterised in that the holding device has a detachable locking device which arrests in the different longitudinal positions/snap-in positions of the anterior swivel lever or in the different angular positions of the respective anterior or posterior swivel lever (6).

5. A vehicle seat according to claim 3 or claim 4, characterised in that the detent link (13) is formed closed in an approximately vertical seat longitudinal plane.

6. A vehicle seat according to one of claims 1 to 5, characterised in that the seat section (2) has a plurality of cushion sections (3, 4, 5) arranged one behind the other, of which one posterior cushion section (3) forms the seat section cushion (3').

7. A vehicle seat according to claim 6, characterised in that the anterior cushion section (5) can be swivelled about an anterior lower transverse axis (14) from the normal position forwards into a limited angular position in which the lower side (16) of the anterior cushion section (5) in the normal position forms a foot support and/or an aid for the user of the child seat to get into it.

8. A vehicle seat according to claim 6 or claim 7, characterised in that a central cushion section (4) is loosely laid on the seat section (2) and at its posterior edge region can be approximately swivelled about a transverse axis (17) and is connected to the front edge of the seat section cushion (3').

9. A vehicle seat according to claim 8, characterised in that in some or all of the height positions of the seat section cushion (3') the front edge of the central cushion section (4) lies on the seat section (2) and/or at least in the highest position of the seat section cushion the central cushion section abuts a limit stop of the seat section cushion.

## Revendications

1. Siège de véhicule automobile, transformable en siège d'enfant, comprenant un dossier (1) et une assise (2) équipée d'un coussin d'assise (3') et qui peut, par l'intermédiaire de deux leviers latéraux (6, 6') passer d'une position normale à une position relevée, les leviers (6, 6') étant disposés l'un derrière l'autre et pouvant basculer le long du coussin d'assise (3') autour d'un axe transversal à l'assise (7 et 7') respectivement, le levier (6') étant articulé par son autre extrémité à l'assise (2) tandis que l'extrémité (8), éloignée du coussin (3') et appartenant au levier (6) qui n'est pas articulé à l'assise (2) peut être déplacé sensiblement longitudinalement pour régler la hauteur du coussin d'assise (3') et être fixé dans différentes positions le long de l'assise (2), par un dispositif de maintien (13),
caractérisé en ce que
le levier basculant arrière (6') constitue le levier articulé à l'assise de siège (2) et comprend un bras (12) qui dépasse son point d'articulation (7') le long du coussin d'assise (3') et sur lequel est articulée une barre d'accouplement (11) reliée par ailleurs au levier basculant avant (6), par une articulation située vers le milieu de ce levier.

2. Siège de véhicule selon la revendication 1,
caractérisé en ce que
le dispositif de maintien présente le long de l'assise (2) un dispositif d'arrêt (13) comportant des points d'arrêt (10, 10', 10'', 10''') disposés les uns derrière les autres sensiblement selon la direction longitudinale du siège et dans lesquels peut venir se fixer l'extrémité (8) du levier basculant avant (6) éloignée du coussin d'assise (3').

3. Siège de véhicule selon la revendication 2,
caractérisé en ce que
les points d'arrêt (10, 10', 10'', 10''') sont matérialisés par des évidements pratiqués par exemple dans le dispositif d'arrêt (13) ayant la forme d'une coulisse, ou par des portées externes sur des pivots ou organes analogues, coopérant avec une contre portée correspondante du levier basculant avant (6).

4. Siège de véhicule selon une des revendications 1 à 3,
caractérisé en ce que
le dispositif d'arrêt comporte un système de verrouillage amovible qui bloque le levier basculant avant dans les différentes positions longitudinales c'est-à-dire au niveau des points d'arrêt, ou qui bloque le levier basculant avant (6) ou arrière (6') concerné dans différentes positions angulaires.

5. Siège de véhicule selon la revendication 3 ou 4,
caractérisé en ce que
la coulisse d'arrêt (13) est située dans un plan sensiblement vertical fermé, parallèle à la direction longitudinale du siège.

6. Siège de véhicule selon une des revendications 1 à 5,
caractérisé en ce que
l'assise (2) porte plusieurs éléments de coussin (3, 4, 5) disposés les uns derrière les autres et dont celui (3) situé en arrière constitue le coussin d'assise (3').

7. Siège de véhicule selon la revendication 6,
caractérisé en ce que
l'élément avant de coussin (5) peut basculer vers l'avant autour d'un axe transversal (14) situé en bas et en avant, pour passer de la position normale à une position présentant une inclinaison limitée telle que la partie de sous, constitue un repose-pied et/ou une aide à le monté pour l'utilisateur du siège d'enfant.

8. Siège de véhicule selon la revendication 6 et 7,
caractérisé en ce qu'à
un élément médian de coussin (4) repose librement sur l'assise (2) et se trouve relié, le long de son bord arrière au bord avant de l'élément de coussin d'assise (3'), de manière à pouvoir basculer autour d'un axe sensiblement transversal (17).

9. Siège de véhicule selon la revendication 8,
caractérisé en ce que
le bord avant de l'élément médian de coussin (4) est en appui sur l'assise (2), dans une ou dans toutes les positions en hauteur du coussin d'assise (3') et/ou l'élément médian de coussin, au moins dans la position la plus élevée du coussin d'assise, est en appui sur une butée du coussin d'assise.
